# EUROPÄISCHE PATENTANMELDUNG

(11) **EP 0 580 973 A1**
(43) Veröffentlichungstag der Anmeldung: **02.02.1994**
(21) Anmeldenummer: 93107975.0
(22) Anmeldetag: 17.05.1993
(51) Int. Cl.: B67D 5/04, B67D 5/08, B67D 5/18, G01F 11/04

(54) **Abgabeeinrichtung für Flüssigkeiten, insbesondere Mineralölprodukte**

(30) Priorität: 14.07.1992 DE 9209384 U
(71) Anmelder: DEUTSCHE TECALEMIT GmbH, D-33651 Bielefeld (DE)
(72) Erfinder: Plehn, Reinhard, W-4815 Schloss-Holte-Stukenbrock (DE); Temme, Ulrich, W-4815 Schloss Holte-Stukenbrock (DE)
(74) Vertreter: Thielking, Bodo, Dipl.-Ing.

(57) **Zusammenfassung**

Bei Abgabeeinrichtungen für Flüssigkeiten sind Zapfstellen bekannt, deren Unterkanten fest sind. Diese bekannten Zapfstellen sind nicht für jedes Auffanggefäß geeignet. Die Erfindung schlägt deshalb vor, daß der Abstand zwischen dem Zapfstellenauslauf (3) und dem Auffanggefäß pneumatisch aus einer Grundstellung mit größerem Abstand in eine Abgabestellung mit verringertem Abstand verfahrbar ist.

## Beschreibung

Die Erfindung betrifft eine Abgabeeinrichtung für Flüssigkeiten nach dem Oberbegriff des Anspruchs 1.

Bei bekannten derartigen Abgabeeinrichtungen ist der Zapfstellenauslauf ortsfest angeordnet. Die ortsfeste Anordnung des Zapfstellenauslaufs hat den Nachteil, daß eine sichere Befüllung wiederverwendbarer Auffanggefäße nicht gewährleistet ist.

Der Erfindung liegt die Aufgabe zugrunde, eine Abgabeeinrichtung der als bekannt vorausgesetzten Art zu schaffen, welche für eine sichere Abgabe von Flüssigkeiten, insbesondere Mineralölprodukten, in spezielle, wiederverwendbare Auffanggefäße geeignet ist. Die Abgabeeinrichtung soll insbesondere für den Selbstbedienungsbetrieb geeignet sein.

Die Lösung dieser Aufgabe erfolgt mit den Merkmalen des Kennzeichnungsteils von Anspruch 1.

Bevorzugte Ausgestaltungen der erfindungsgemäßen Abgabeeinrichtung sind in den Unteransprüchen beschrieben und ergeben sich auch aus der nachfolgenden Zeichnungsbeschreibung in Verbindung mit der Zeichnung.

Es zeigen:
- Figur 1: - einen pneumatischen Schaltplan für die Betätigungs- und Kontrolleinrichtung der Abgabeeinrichtung,
- Figur 2: - einen hydraulischen Wirkschaltplan einer ersten Ausführungsform der Abgabeeinrichtung,
- Figur 3a: - eine Seitenansicht mit Teilschnitt des Abgabekopfes,
- Figur 3b: - einen vertikalen Schnitt durch den Abgabekopf und eine Meßvorrichtung,
- Figur 3c: - eine der Schnittdarstellung gemäß Figur 3b im wesentlichen entsprechende Seitenansicht,
- Figur 4a: - einen Schnitt durch den Abgabekopf entlang Ebene IVa-IVa gemäß Figur 4b,
- Figur 4b: - eine Draufsicht auf den Abgabekopf,
- Figur 5: - einen hydraulischen Wirkschaltplan einer zweiten Ausführungsform,
- Figur 6: - einen hydraulischen Wirkschaltplan einer dritten Ausführungsform,
- Figur 7: - einen hydraulischen Wirkschaltplan einer weiteren Ausführungsform.

In den unterschiedlichen Ausführungen sind gleiche oder einander entsprechende Teile jeweils mit gleichen Bezugszeichen versehen.

Die abzugebende Flüssigkeit ist in unterschiedlichen Vorratsbehältern 1 und 2 angeordnet. Die Zahl der Behälter entspricht der Zahl der abzugebenden Flüssigkeitssorten.

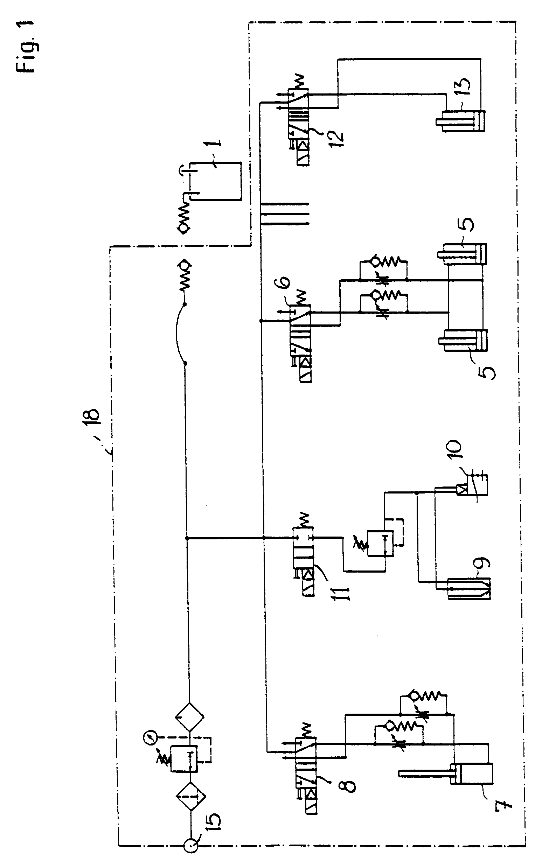

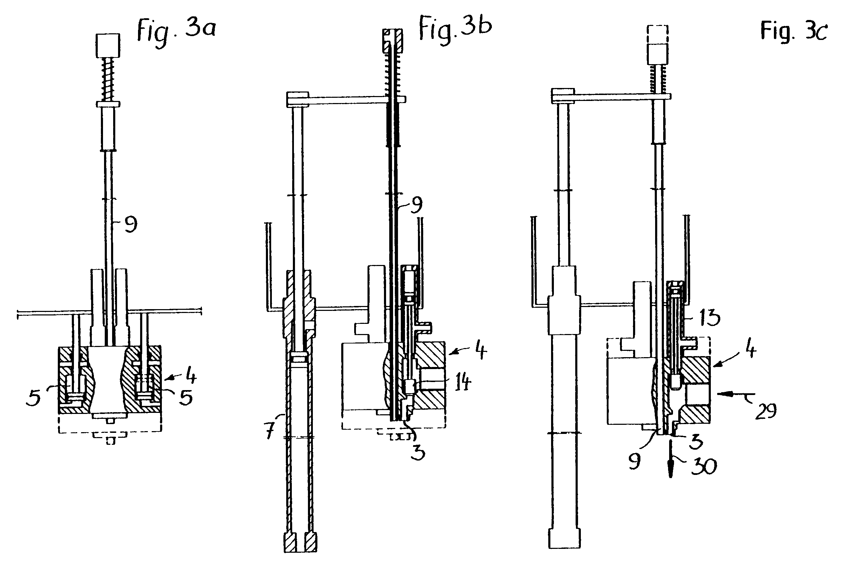

Beim Betrieb der Einrichtung wird zunächst ein Mehrwegbehälter des Kunden unter den Zapfstellenauslauf 3 des Gehäuses 4 des Abgabekopfes gestellt. Danach wird die gesamte Einrichtung gestartet, beispielsweise durch Einwurf eines Chips, durch eine Magnetkarte oder durch eine Fernsteuerung von anderer Stelle. Es fährt nun zunächst der Abgabekopf 4 aus seiner oberen Bereitschaftsstellung, die in Figuren 3a und 3b mit durchgezogenen Linien gezeigt ist, in die dort in unterbrochenen Linien dargestellte Abgabeposition. Die entsprechende Betätigung erfolgt durch eine pneumatische Betätigungseinrichtung, welche aus zwei parallelgeschalteten pneumatischen Hubzylindern 5 besteht, welche in das Gehäuse 4 des Abgabekopfes integriert sind. Die beiden parallelgeschalteten Hubzylinder 5 werden durch ein 2/2-Ventil 6 (vgl. Figur 1) angesteuert. Nach Erreichen der in Figuren 3a und 3b gestrichelt dargestellten Abgabeposition wird zunächst der Zylinder 7 über ein 2/2-Ventil 8 (vgl. Figur 1) betätigt, welcher die mit ihm mechanisch gekuppelte pneumatische Meßsonde 9 in den Mehrwegbehälter einführt. Die pneumatische Meßsonde 9 stellt in Verbindung mit dem PE-Wandler 10 fest, ob der Mehrwegbehälter leer ist. Die Meßsonde 9 und der PE-Wandler 10 werden von einem 2/2-Ventil 11 (vgl. Figur 1) angesteuert. Wenn die Meßsonde feststellt, daß der Mehrwegbehälter nicht leer ist, kann eine Abgabe nicht erfolgen. Wird festgestellt, daß der Mehrwegbehälter leer ist, kommt das Kommando zur Öffnung des pneumatischen 2/2-Ventils 12, welches den Betätigungszylinder 13 für das Sperrorgan 14 zur Abgabe der Flüssigkeit über den Zapfstellenauslauf 3 freigibt.

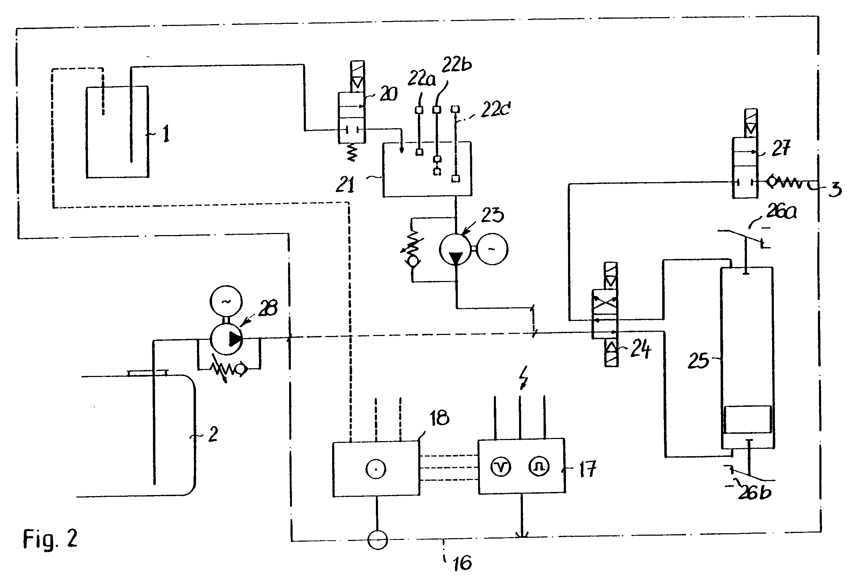

In Figur 1 ist das gesamte pneumatische System 18 genauer dargestellt. Dieses pneumatische System 18 ist in Figur 2 als Hauptbestandteil der gesamten Einrichtung angedeutet. Aus Figur 2 ergibt sich ferner das Vorsehen eines elektrischen Steuer- und Kontrollgeräts 17.

Eine vollständige Einrichtung 18 enthält die beiden Hubzylinder 5, den Zylinder 7, die Meßsonde 9 mit dem PE- Wandler 10 und den zuhörigen Steuerventilen 6, 8 und 11 je einmal, hingegen den pneumatischen Betätigungszylinder 13 für das Sperrorgan 14 entsprechend der Zahl der abzugebenden Produkte, im Ausführungsbeispiel also vierfach.

Bei der Ausführungsform gemäß Figur 2 erfolgt die Abgabe eines Produktes, das sich im Vorratsbehälter 2 befindet, über den Zapfstellenauslauf 3. In der Grundausführung einer eichfähigen Einrichtung 16 (vgl. Figur 2) wird der Schmierstoff aus dem pneumatisch beaufschlagten Vorratsbehälter 1 über ein 2/2-Ventil 20 einem Zwischenbehälter 21 zugeführt. Dieser besitzt unterschiedliche Füllstandssensoren 22a für "Notaus", 22b für Aus- und Einschaltung der Pumpe 23 und 22c für "Minimum". Der Zwischenbehälter 21 dient dazu, in jedem Fall eine vollständige Abgabe auch dann sicherzustellen, wenn der Vorratsbehälter 1 leer sein sollte.

Die Pumpe 23 befördert das Produkt alternierend über ein 2/2-Ventil 24 zu einem volumetrischen, doppelt wirkenden Hubkolbenmeßwerk 25, dessen beiden Kolbenendstellungen durch die beiden Endschalter 26a und 26b erfaßt werden. Der Ausgang vom Hubkolbenmeßwerk 25 führt über das 2/2-Abgabeventil 27 zum Zapfstellenauslauf 3. Weitere Bestandteile der insgesamt mit 16 bezeichneten Einrichtung sind das elektrische Steuer- und Kontrollgerät 17 und das pneumatische System 18, das bereits genauer beschrieben wurde.

Die Entnahme aus dem Vorratsbehälter 1 gemäß Figur 2 ist eichfähig, da ein Zwischenbehälter 21 mit Füllstandsensoren vorgesehen ist. Die Entnahme aus dem Vorratsbehälter 2 mit Hilfe einer Saug-Druckpumpe 28 zeigt in der dargestellten Ausführung eine nicht eichfähige Variante.

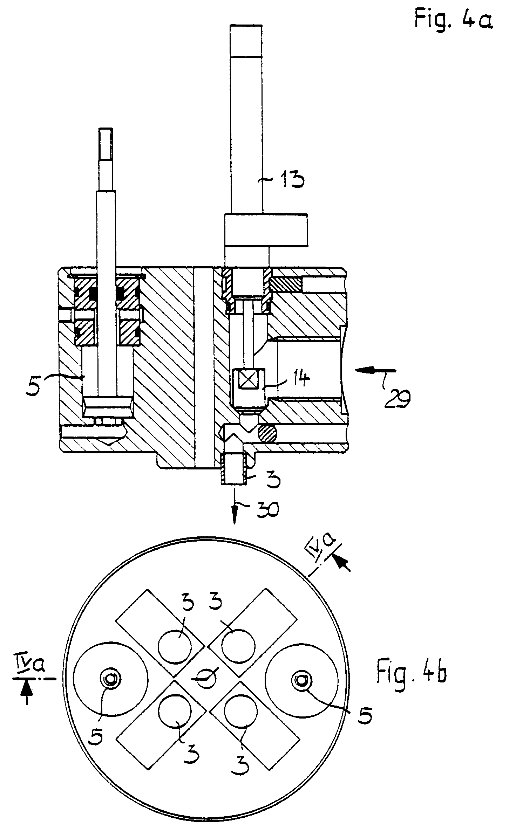

Der in Figuren 4 dargestellte Abgabekopf hat insgesamt vier Zapfstellenausläufe 3, welche sämtlich schematisch in Figur 4b angedeutet sind. Die Zapfstellenausläufe 3 haben sämtlich den gleichen konstruktiven Aufbau, wie er aus der Schnittzeichnung gemäß Figur 4a für einen Zapfstellenauslauf ersichtlich ist.

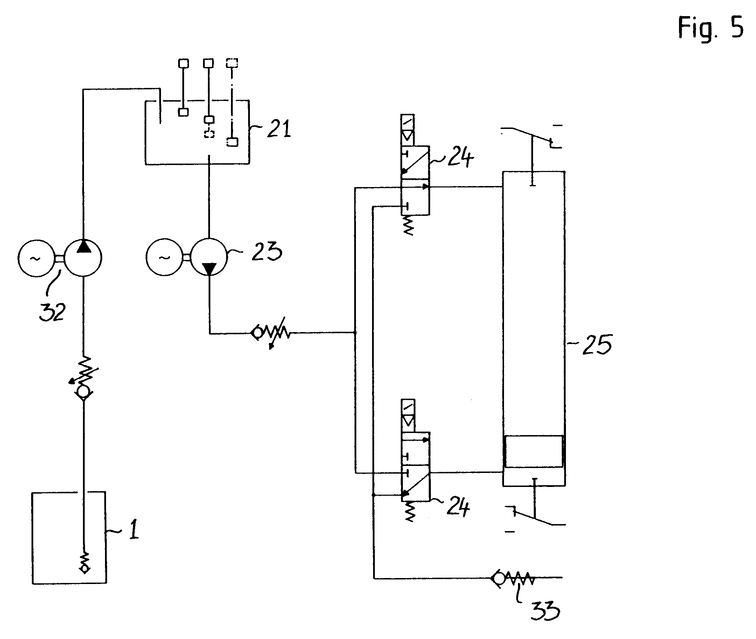

Bei dem pneumatischen Schaltbild gemäß Figur 5 ist der Fall dargestellt, wo das Produkt aus einem Vorratsbehälter 1 mit einer Pumpe 32 zum Zwischenbehälter 21 gefördert wird und mit der weiteren Pumpe 33 über zwei parallel geschaltete 2/2-Ventile 24 zum Hubkolbenmeßwerk. Die Abgabe aus dem Zapfstellenauslauf erfolgt über ein einfaches Rückschlagventil 33. Dementsprechend sind zwei 2/2-Ventile 24 parallel vorgeschaltet, die ihrerseits vor dem Hubkolbenmeßwerk 25 angeordnet sind.

In der Zeichnungsfigur 6 ist als Variante gegenüber Figur 5 eine in zwei Förderrichtungen wirkende Pumpe 34 mit einem polumschaltbaren Elektromotor 35 dargestellt.

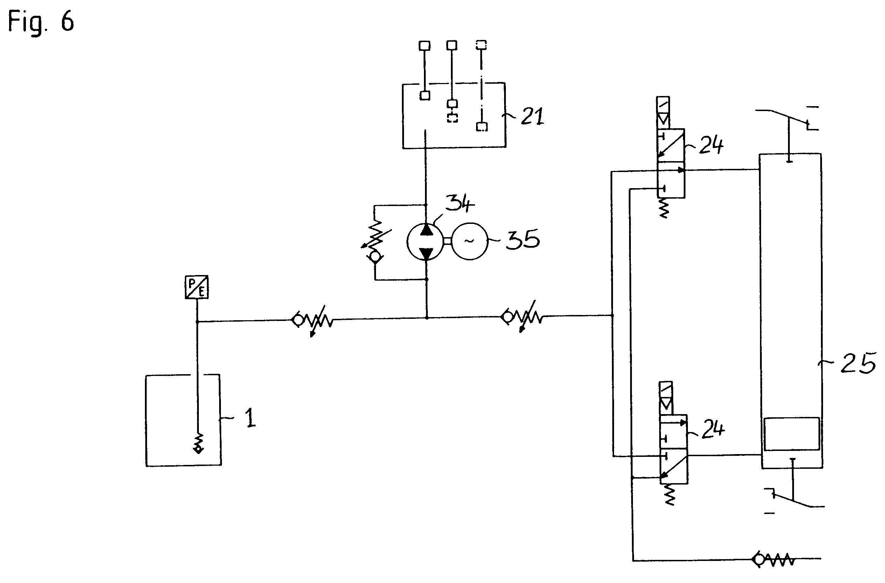

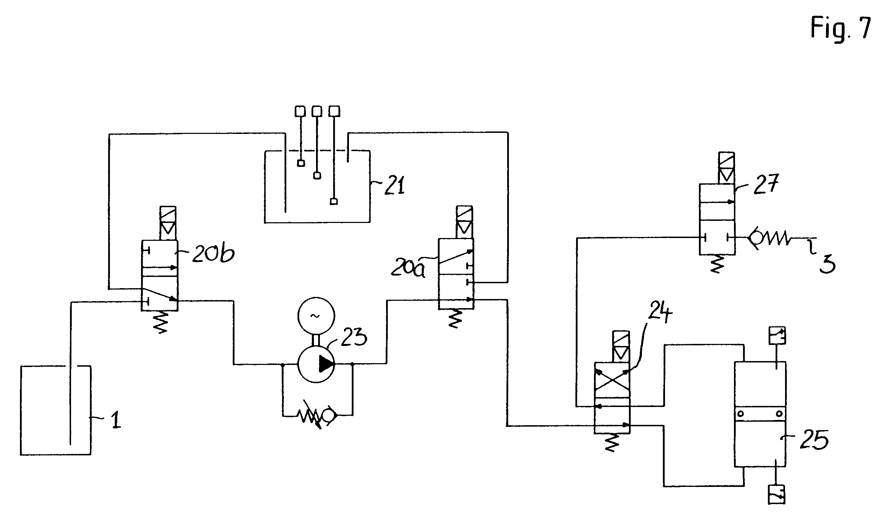

Figur 7 stellt eine Variante der Kombinationen von Figuren 2 und 6 dar:

In einer Schaltstellung des 2/2-Ventils 20a wird der Zwischenbehälter 21 mit der Pumpe 23 befüllt, das andere 2/2-Ventil 20b ist auf die Saugstellung zum Vorratsbehälter 1 geschaltet. In der Schaltstellung "Abgabe" bewirken diese beiden 2/2-Ventile 20a und 20b eine hydraulische Verbindung vom Zwischenbehälter 21 über die Pumpe 23, über das 2/2-Ventil 24, das Hubkolbenmeßwerk 25 und das 2/2-Abgabeventil 27 zum Zapfstellenauslauf 3.

Mit 29 ist der Produktzulauf vor der Absperrvorrichtung 14 des Abgabekopfes 4 symbolisiert, mit 30 das aus dem Zapfstellenauslauf 3 austretende Produkt.

## Patentansprüche

1. Abgabeeinrichtung für Flüssigkeiten, insbesondere Mineralölprodukte, mit mehreren Vorratsbehältern, die über Leitungen mit einer gemeinsamen Zapfstelle verbunden sind, zum Befüllen eines Auffanggefäßes,
dadurch gekennzeichnet,
daß der Abstand zwischen Zapfstellenauslauf (3) und Auffanggefäß pneumatisch aus einer Grundstellung mit größerem Abstand in eine Abgabestellung mit verringertem Abstand verfahrbar ist.

2. Abgabeeinrichtung nach Anspruch 1,
dadurch gekennzeichnet,
daß der Zapfstellenauslauf (3) pneumatisch aus der angehobenen Grundstellung in die abgesenkte Abgabestellung verfahrbar ist.

3. Abgabeeinrichtung nach Anspruch 1 oder 2,
dadurch gekennzeichnet,
daß eine pneumatische Betätigungseinrichtung (5) für ein Anheben bzw. Absenken des Zapfstellenauslaufs (3) in ein Gehäuse (4) des Zapfstellenauslaufs integriert ist.

4. Abgabeeinrichtung nach einem oder mehreren der Ansprüche 1 bis 3,
dadurch gekennzeichnet,
daß der Zapfstellenauslauf (3) mittels eines pneumatisch betätigbaren Sperrorgans wahlweise sperrbar bzw. freigebbar ist.

5. Abgabeeinrichtung nach einem oder mehreren der Ansprüche 1 bis 4,
dadurch gekennzeichnet,
daß neben dem Zapfstellenauslauf (3) eine pneumatisch betätigbare Füllstandsmeßeinrichtung für den zu befüllenden Behälter angeordnet ist.

6. Abgabeeinrichtung nach Anspruch 5,
dadurch gekennzeichnet,
daß die Füllstandsmeßeinrichtung eine pneumatische Meßsonde (9) ist.

7. Abgabeeinrichtung nach einem oder mehreren der Ansprüche 1 bis 6,
dadurch gekennzeichnet,
daß das pneumatisch betätigbare Sperrorgan (14) im Zapfstellenauslauf (3) ausschließlich nach Freigabe durch die Füllstandsmeßeinrichtung (9) zu öffnen ist.

8. Abgabeeinrichtung nach einem oder mehreren der Ansprüche 1 bis 7,
dadurch gekennzeichnet,
daß der Vorratsbehälter (1) mit einem Zwischenbehälter (21) verbunden ist.

9. Abgabeeinrichtung nach einem oder mehreren der Ansprüche 1 bis 8,
dadurch gekennzeichnet,
daß der Zwischenbehälter mindestens eine Füllstandsmeßeinrichtung (21a) aufweist.

10. Abgabeeinrichtung nach einem oder mehreren der Ansprüche 1 bis 9,
dadurch gekennzeichnet,
daß in der Zulaufleitung zum Zapfstellenauslauf (3) eine volumetrische Dosiereinrichtung (25) angeordnet ist.

11. Abgabeeinrichtung nach Anspruch 10,
dadurch gekennzeichnet,
daß die volumetrische Dosiereinrichtung (25) ein Hubkolbenmeßwerk ist.
